# EUROPEAN PATENT APPLICATION

(11) **EP 4 683 273 A1**
(43) Date of publication of application: **21.01.2026**
(21) Application number: 25189720.3
(22) Date of filing: 15.07.2025
(51) Int. Cl.: H04L 9/40, G06N 3/02, G06N 20/00, G06Q 20/40

(54) **COMPUTER-IMPLEMENTED METHOD FOR DETECTING A MALICIOUS APPLICATION OR WEBSITE, AND COMPUTER SYSTEM THEREOF**

(30) Priority: 15.07.2024 PT 2024119595
(71) Applicant: Feedzai - Consultadoria e Inovação Tecnológica, S.A., 3030-199 Coimbra (PT)
(72) Inventor: LIÉBANA DE LA BARRERA, JAVIER, 3030-199 COIMBRA (PT); DE OLIVEIRA VIEIRA ALVES, LEONARDO, 3030-199 COIMBRA (PT); MARQUES COSTA, RITA, 3030-199 COIMBRA (PT); COLAÇO FERREIRA, HUGO RICARDO, 3030-199 COIMBRA (PT); SANTOS RODRIGUES BIZARRO, PEDRO GUSTAVO, 3030-199 COIMBRA (PT)
(74) Representative: Patentree

(57) **Abstract**

Computer-implemented method for detecting a malicious application or website by a transaction processing application, the method comprising: inputting a transactional request, by said transaction processing application, comprising a transactional data record and a screenshot; sending the input data record and input screenshot to a backend controller; requesting to a prompt selector, a string comprising a feature-extraction prompt; sending the input screenshot and the received prompt string to a Large Vision Model, LVM; receiving a string comprising risk classification features from said LVM; verifying the received string by a format parser; if the received string fails the verification, requesting by the backend controller, to the prompt selector, a string comprising a feature-extraction prompt which explicitly mentions format parsing compatibility, and repeating the preceding steps; sending the received string to a risk classification model for providing a risk classification; sending the risk classification to the backend controller; determining by the backend controller if the application or website is determined as malicious, and accepting or rejecting the transactional request accordingly.

## Description

### TECHNICAL FIELD

The present disclosure relates to a computer-implemented method for detecting a malicious application or website by a transaction processing application, and computer system thereof, wherein the transaction processing application is, respectively, a mobile device application or a website transaction processing gateway, including sending an input screenshot and a feature-extraction prompt string, from a backend controller, to a Large Vision Model, LVM.

### BACKGROUND

In many high-stakes scenarios, the accurate processing of complex information is crucial. Professionals in fields such as finance, law or logistics are tasked with analyzing vast amounts of textual and graphical data (e.g. charts, graphs, and extensive documents), an often resource-demanding and time-consuming process. The complexity of these analyses makes it so that non-expert access to personally tailored professional advice is either limited or highly expensive. For instance, should an individual require help to determine if a product's listing is a scam, they could greatly benefit from consulting a professional, if the cost of doing so were not so expensive.

The following relates to Retrieval-Augmented Generation. The wealth of data on which modern generative multimodal models are trained not only allows them to achieve remarkable natural language processing capabilities, but also to possess a vast amount of knowledge in a wide range of fields. GPT-4V [2] has been shown to excel in highly complex and knowledge intensive text-based tasks (e.g. mathematical reasoning, professional medical board exam questions). In a Visual Question Answering (VQA) task comprised of commonsense open-ended questions [11] (e.g. "How many pets are in this image?", "Is the TV on?", "How many donuts have sprinkles") pertaining to a specific image, both GPT-4o and IDEFICS 2 achieve remarkable performance, 84% and 86% respectively [1], demonstrating that these models are able to comprehend both text and images effectively.

However, as noted by [10], there are limitations inherent to pre-trained LLMs, and, subsequently, LVMs, especially in domain-specific and knowledge-intensive tasks, where the model's performance is harmed significantly if the number of task-relevant documents during pre-training is reduced. In a VQA task which requires the models to possess extremely detailed knowledge of scientific fields [30], LVMs perform significantly worse. In chemistry related questions, which require the comprehension of technical diagrams and complex schematics, GPT-4o and IDEFICS 2 now achieve only accuracies of 44% and 35%, respectively. In 207 multiple choice medical imaging questions extracted, Jin et al. [13] show that, although the accuracy of GPT-4V is higher than that of trained experts, its rationale is incorrect on 35% of the correct answers, with the most common cause being poor image comprehension (27.2%), where the model inadequately describes the contents of the provided image, as opposed to knowledge recall (8.9%) and reasoning (12.4%). These findings demonstrate that, in spite of their proficiency in natural language processing, even state-of-the-art LVMs can, at least currently, have weaknesses in their image comprehension abilities when faced with complex tasks.

To tackle issues regarding lack of necessary knowledge, Retrieval-Augmented Generation (RAG) [18] has been proposed to enhance a LLM's performance and reduce the likelihood of incorrect generations by retrieving relevant information from an external knowledge base and adding it to the prompt.

There are several approaches for black-box RAG implementation, however, the present disclosure will focus on its simplest description: Naïve RAG, as defined by [10], since further advancements mostly focus on refining the information retrieval system. The Naive approach focuses on three main steps:
an indexing phase, which involves curating the data, encoding it into embeddings so that similarity searches can be used in the subsequent phase;
a retrieval phase, where a system encodes the query so that similarity search is employed to find the relevant information; and
a generation phase, where the initial query, as well as the retrieved information, are concatenated into a final prompt which is fed into the model.

RAG has been shown to significantly improve a model's performance with minimal costs. The authors of reference [21] maintain an up-to-date benchmark [1] for LLMs across several scenarios, including the Natural Questions dataset [16], for which the authors prompt each model to answer anonymized Google queries, either omitting (closed-book) or including (open-book) the Wikipedia page that contains the information needed to answer the question in the model's prompt. The performance gains from the closed-book to the open-book scenario are remarkable, in some cases, up to doubling a model's performance.

The following pertains to Optical Character Recognition. In domains such as detection of transactional misconduct, law-related tasks or logistic log verifications, user-submitted images may consist primarily of scanned documents, e-mail screenshots and product listings. In these use-cases, the main task of the LVM is to perform Optical Character Recognition (OCR), converting an image of text into a machine-readable text format.

It could then be argued that a more accurate approach for these use cases would be to first employ a state-of-the-art OCR algorithm such as the ones provided by [15] on the provided image, and then feed the extracted text along with the prompt to an LLM. This approach has a few disadvantages. First, it requires the use of large, task-specific, pre-trained models which would have to be run, at inference time, in the client's system. Second, depending on the use case, different pre-trained models would have to be used, since models that specialize in text recognition (i.e. reading text from an image) are not trained in Key Information Extraction (KIE) tasks (i.e., extracting field values from a structured document/page such as a product listing), where other models would have to be used. The necessity for separate models depending on the user input would require some sort of triage system, further increasing the complexity of the system. Therefore, this approach should only be taken into consideration if these OCR algorithms do, in fact, perform significantly better than LVMs at extracting text and key information from images of scanned documents, as the use of LVMs would offer a much more practical solution. Finally, while OCR methods can be trained to extract data from structured documents, LVMs boast a much wider knowledge-base due to their massive amounts of training data, allowing them to leverage commonsense reasoning and semantic knowledge to perform these tasks, an ability which is outside the scope of even KIE supervised methods.

The following pertains to Text Recognition related to Optical Character Recognition. Liu et al. [23] perform an extensive benchmark of several open-source LVMs on a series of OCR tasks, first focusing on text recognition, where the model's task is to recognize a word depicted in an image. The models are tested in datasets containing born-digital pictures (e.g. files created for online transmission), a dataset containing artistic WordArt, as well as several datasets containing "Scene text" (e.g. text that appears in an image captured by a camera in an outdoor environment). Finally, the authors synthesize two new datasets, one containing screenshots of words displayed in a digital format with a regular font, and another containing the same words but with the order of letters being scrambled. The authors demonstrate that open-source LVMs such as UniDoc [8] are capable of achieving performance only slightly lower (at most 6 p.p. of difference) than that of PARSeq, a state-of-the-art supervised method [5], surpassing it on two of the text recognition datasets. LVMs perform similarly to the supervised state-of-the-art method even on highly irregular text and blurry images, as long as the text is semantic (i.e. real words and not jumbled up letters).

The following pertains to Visual Question Answering and Key Information Extraction related to Optical Character Recognition. Note, however, that the task of the LVM when processing a user's input may not be limited to extracting text. The image comprehension process may be more complex when processing documents containing tables, charts, or other structured forms of information. In the same benchmark mentioned previously, the authors also test the LVMs in three Visual Question Answering datasets, where the model is tasked with answering questions based on a provided document, chart or infographic, respectively. In these scenarios, the supervised state-of-the-art methods are tailored to each specific task, being trained and tested on separate splits of the same dataset.

The authors also test GPT-4V on a VQA dataset comprised of a smaller number of samples from each of the VQA datasets mentioned previously. They observe that GPT-4V's average performance in the smaller VQA dataset is 66% higher than Monkey [20], the highest rated open-source model. Furthermore, it is higher than the supervised state-of-the-art methods' average by 6 p.p.

The authors of the previously mentioned benchmark also test open-source, as well as closed-source models, on three KIE datasets, where the models are tasked with extracting information regarding a particular field in a receipt, nutritional label, or forms, respectively. For these tasks, the supervised state of the art methods are ErnieLayout, StrucTexT [19] and by Kuang et al.'s CFAM approach [16]. Note that these algorithms were, again, trained and tested on separate splits of these datasets, making them highly specialized in each task. For each dataset, the highest performing open-source LVMs - Monkey [20] and DocPedia [7] - perform significantly worse than the supervised methods. Testing GPT-4V in a smaller sample of KIE tasks, the authors observe that it remains below the average Supervised state-of-the-art performance (80% accuracy vs 90% accuracy), but achieves an 82% increase in performance when compared to Monkey.

Even if the mentioned supervised methods achieved better performance than state-of-the-art LVMs, these specialized supervised methods require a quite specific training over labeled datasets with the exact format of the task at hand (i.e., receipts, forms), which may then limit their generalization capabilities, requiring a separate model for each task. However, state-of-the-art LVMs, even if they are not specifically trained over such restricted datasets, are able to achieve close performance over a wide variety of tasks. This makes LVMs a well suited, practical solution for a wide variety of OCR, KIE and VQA tasks, making it unnecessary to train and selectively employ several different OCR methods.

Note also that in all aforementioned tasks, the models are prompted with straightforward requests and no additional information. No large-scale benchmark exists that takes into account easy to implement prompt engineering methods, such as few-shot prompting [6] (i.e., showing the model an example of a correctly solved task); or Zero-shot Chain-of-Thought prompting [1\4], which involves simply asking the model to "Think step-by-step" at the end of the prompt, both of which have been shown to significantly boost LLMs' accuracy. Pairing more sophisticated prompting approaches with RAG, has the potential to significantly improve the consistency and accuracy of these models.

These findings demonstrate the incredible potential that LVMs hold as visual "feature extractors" in various use-cases, as they can be relied on to extract information from various document formats. As such, models such as GPT-4V serve as an effective plug-and-play solution for information extraction tasks, without the costs associated with gathering and annotating data for training various OCR, VQA and KIE methods for the client's specific use case.

The following pertains to Hallucination Mitigation and Detection Methods. Large generative models suffer from what is commonly referred to as hallucinations: the generation of nonsensical or factually incorrect responses to a user's query. Hallucinations in both LLMs and LVMs may occur, among other causes, due to the use of massive training data [31], making it difficult to eliminate outdated, incorrect or biased data. The potential causes of hallucinations in LVMs are even more varied, as their structure typically comprises three components: a visual encoder, a modality connection module, and a LLM. The visual encoder transforms input images into visual tokens, which are then aligned by the connection module with the word embedding space of the LLM by using modality-alignment methods such as cross-attention [3], thus ensuring that the LLM can handle the visual information. Finally, the tokenized prompt containing the visual information is passed on to the LLM, which generates the response. As such, there are specific challenges that face LVMs, as the propensity for hallucinations can be increased by poor visual encoding and modality alignment [22], as well as the causes that have been known to affect LLMs, such as the presence of misinformation and biases in their training data.

The following pertains to Hallucination Mitigation. There are several hallucination prevention methods that can be applied in various phases of the Large Generative Model development process, starting with LLM-targeted techniques [31]. The mitigation of the propensity for hallucinations starts at the pre-training step, where the developers of Llama 2 [26], for example, up-sample data from highly factual sources when constructing the pre-training dataset. The same approaches to improving the quality of the available data can also be applied to subsequent supervised fine-tuning [9] steps. Currently available advanced LLMs, such as Llama2-Chat [26] and GPT-4, conduct an additional training step: reinforcement learning from human feedback [9], which involves training a reward model as a proxy for human preference, and further optimizing the model using reinforcement learning strategies.

LVM-specific hallucination mitigation techniques focus on the quality of the vision encoder and the connection module's alignment techniques. Enlarging the input resolution of the visual encoder has been suggested to effectively reduce hallucinations [4], however, training high-resolution visual encoders with extensive data can be highly resource demanding.

While these approaches result in more reliable models, they require massive amounts of data and incur extremely high computational costs, making them unfeasible in many applications. Furthermore, the currently available highest performing LVMs, such as GPT-4V, are closed-source [1], meaning that developers may not able to easily manipulate these models at will. Even the costs of fine-tuning an existing LLM for a specific task through a publicly accessible Application Programming Interface (API) may be unfeasible, especially when taking into account the need for a sizeable task-specific dataset. Also, the speed at which new LVMs have been developed may make even a fine-tuned model obsolete within a relatively short time-frame, resulting in an unnecessary expense.

The first step towards mitigation of the hallucination is the use of RAG itself, which has been shown to mitigate model hallucinations, and is considered an efficient "plug-and-play" solution [31]. Furthermore, in the image-based use-case, it is essential that the image provided to the model is of high enough resolution, allowing the visual encoder to function to the best of its ability.

Another possible approach involves altering the model's *Decoding Strategy* [31], that is, determining how output tokens are chosen from the output probability distribution. A common approach for token decoding is nucleus sampling [12], which is more commonly known as top-p sampling. This strategy involves sampling the following token only from the top candidates with total cumulative probability p, thus introducing some randomness into the text generation. Top-p sampling is widely used by LLMs as it mitigates the degeneration problems (e.g. repetition) of the greedy decoding algorithm, which simply selects the token with the highest log-probability. Alternatively, this sampling method can also be parameterized by defining the number of highest log-probability tokens from which the token can be selected, which is often referred to as top-k sampling. However, reference [17] shows that the greedy decoding approach significantly reduces the number of model hallucinations when compared to top-p/top-k sampling.

Currently available black-box APIs such as OpenAl's API or AWS Bedrock do not allow for a direct modification of the token decoding algorithm; however, most allow for modification of the top-p or top-k p and k values. In this use-case, a reduction of these values would approximate the top-p sampling to the greedy decoding algorithm, thus allowing for a trade-off between variability and factuality.

The following pertains to Hallucination Detection. Having applied hallucination mitigation techniques, it is also important to ensure that the final model output be monitored for any possible hallucination, should they happen.

A possible approach involves leveraging uncertainty estimation for detecting hallucinations in generative models. In the case of a black-box setting, methods which leverage the log-probabilities of the generated tokens are not applicable, thus leaving two possible options that have been explored in the literature, the first of which is consistency-based estimation [31], which involves quantifying uncertainty by comparing the variability between responses when querying the model with the same prompt. SelfCheckGPT [24], for example, computes the semantic similarity between separate responses for the same prompt.

An alternative uncertainty estimation approach is verbalize-based estimation [31]. Verbalize-based methods involve prompting the model to provide an uncertainty estimate along with their answer. Tian et al. [25] request the model to provide an answer to a given question along with the probability that said answer is correct, expressed numerically in the 0-1 interval. The authors find that the probabilities estimated by the model are better calibrated than obtaining a probability estimate via sampling the model's answer multiple times, similarly to consistency-based methods.

Xiong et al. [28] contest this finding, as, in their benchmark, consistency-based methods achieve better results. The authors also demonstrate that a combination of these approaches can lead to better results, proposing querying the model for its Top-K guesses alongside with each individual guess's probability of correctness, and repeating this prompt multiple times. They then take the set of answers given by the model (e.g., the set of predicted answers in a multiple-choice question task) and calculate the average value of the probability of correctness for each answer in the set.

This combination of a consistency-based approach with the model's ability to verbalize its own uncertainty produces better calibration than either of the methods on their own, it should therefore be the preferred approach.

These facts are disclosed in order to illustrate the technical problem addressed by the present disclosure.

### GENERAL DESCRIPTION

The present disclosure relates to a computer-implemented method for detecting a malicious application or website by a transaction processing application, and computer system thereof, wherein the transaction processing application is, respectively, a mobile device application or a website transaction processing gateway, including sending an input screenshot and a feature-extraction prompt string, from a backend controller, to a Large Vision Model, LVM.

The present disclosure relates to a computer-implemented method, and system thereof, designed to support users of all levels of expertise in conducting data analysis in both textual and visual formats, providing quick and accurate assessments of the user-provided information at a lower cost. By leveraging state-of-the-art generative models, such as Large Vision Models (LVMs) and Large Language Models (LLMs), the disclosed helps users identify specific features and signals in text, documents and/or images, making complex information processing accessible and understandable without requiring specialized knowledge.

To achieve this goal, a domain-expert, henceforth referred to as an administrator of the disclosed method and system, has comprehensive control over the system's configurations, including feature definitions and parameters that the generative model is tasked with extracting. Therefore, the disclosed system incorporates the multi-model processing abilities and large corpus of wide-ranging knowledge possessed by large generative models, as well as a domain-expert's highly task-specific insights, leading to accurate model responses. The information extracted by the model is used by administrator-defined risk ruleset, statistical methods, or even Machine Learning techniques in order to produce a final risk assessment.

This present disclosure is highly adaptable and is useful in a wide variety of domains. In a scam detection task, the method and system analyses screenshots of potentially malicious websites or applications, and provides a list of identified red flags or alerts which are analyzed to perform a risk classification, and suggests next steps to follow such as rejecting a payment.

An embodiment of the present disclosure is useful to prevent potential cybersecurity attack attempts, by helping the user identify the harmful intents of the sender. Another embodiment performs a detailed analysis of a product's online listing based on the screenshot. In this case, the goal is not only to determine the listing's legitimacy, but also whether or not it constitutes a good offer.

An embodiment is customizable and capable of combining domain-expert knowledge, with multi-modal feature extraction and additional information processing techniques to generate a comprehensive but easily digestible response, including the detected features, and/or a certain set of explanations, to a user's query of text and/or image analysis.

For an embodiment, RAG approaches that assume black-box access to the model are of interest, to enable said embodiment to work with current state-of-the-art models, which are closed-source and accessible only through an API. In the case of most LLMs, this means that access to the weights of the model or their log-probabilities is not possible, or one cannot access to the visual encoder of LVMs, access which would extract visual tokens from the image and the "connector module", responsible for aligning the extracted image tokens with the embedding space of the LLM. The LLM, now having access to both the textual and visual information, performs the final inference step, generating a response. To ensure that the disclosed RAG approach is compatible with black-box access, said embodiment only alters the contents of the prompt that is sent to the model.

In the simplest conceptualization of an embodiment, the indexing and retrieval steps of a Naïve RAG are not necessary, as the augmenting information would simply be the set of features defined by the administrator of the disclosed system. In this case, the model now has expert knowledge in what to look for in a given user request.

Another embodiment comprises a more complex RAG. In the case of disease diagnosis with access to medical imaging, this embodiment operates by not only providing expert-defined red flags to identify, but by also employing indexing and retrieval: searching a database of previously diagnosed cases based on a similarity metric between the image embeddings, and adding the most similar images in the database along with their textual description and diagnosis to the prompt. This would aid the Naïve RAG model in knowing what to look for in the new image, boosting its performance.

In an embodiment, the model is able to extract relevant information from highly structured pages such as an article listing. This task is often referred to as Key Information Extraction (KIE), where the model is asked for a specific field's value within a structured document.

Furthermore, the rapid increase over time in LVM's performance, as well as the vast amount of research focused on the use of LVMs in high-stakes use-cases, suggests that these will only become more accurate and reliable on more complex tasks over time, making an embodiment of the present disclosure easy to upgrade.

To reduce the implementation cost of the present disclosure and allow for versatility in changing model providers, an embodiment uses a fixed, pre-trained model. This allows for the model to function as an interchangeable component in the system, allowing the client to upgrade the model in use as soon as a better version is released. In this use-case, the hallucination mitigation steps must be conducted at inference time, assuming black-box access to the model. One known LVM specific hallucination mitigation method falls under these restrictions. However, this method is suited specifically for image-description generation, and is therefore not suitable for the present disclosure. As such, an embodiment comprises black-box hallucination mitigation methods that have been applied to LLMs and are, therefore also applicable to LVMs.

The present disclosure relates to a computer-implemented method for detecting a malicious application or website by a transaction processing application, wherein the transaction processing application is, respectively, a mobile device application or a website transaction processing gateway, the method comprising:
inputting a transactional request, by said transaction processing application, from an application or website, said request comprising a transactional data record and a screenshot of a transaction screen or page of, respectively, said application or website;
sending the input data record and input screenshot, from the transaction processing application, to a backend controller;
requesting by the backend controller, from a prompt selector, a string comprising a feature-extraction prompt, wherein the feature-extraction prompt is a task-specific risk-related feature-extraction prompt, wherein the task is determined by the input data record;
sending the input screenshot and the received feature-extraction prompt string, from the backend controller, to a Large Vision Model, LVM;
receiving a string comprising risk classification features from said LVM;
verifying the received string by a format parser;
if the received string fails the verification by the format parser, requesting by the backend controller, to the prompt selector, a string comprising a feature-extraction prompt which explicitly mentions format parsing compatibility, and repeating the immediately preceding steps of sending, receiving and verifying;
sending the received string to a risk classification model for providing a risk classification;
sending the risk classification to the backend controller;
determining by the backend controller if the application or website is determined as malicious, and accepting or rejecting the transactional request accordingly.

In an embodiment, the format parser verifies compliance with a json, xml, table or array format.

The risk classification model may be rule-based and the risk classification model includes a ruleset stored in a non-volatile computer-readable medium.

The risk classification model may be a machine learning-based model, in particular a supervised learning model.

In an embodiment, sending the input screenshot and the received feature-extraction prompt string, from the backend controller, to the Large Vision Model, LVM comprises:
sending the input screenshot and the received feature-extraction prompt string to a LVM model repository connector;
selecting a LVM model, by the LVM model repository connector from a LVM model repository;
sending the input screenshot and the feature-extraction prompt string, by the LVM model repository connector, to the selected LVM model.

In an embodiment, the risk classification features comprise one or more selected from the group consisting of: web link or links present in the screenshot; shortened web link or links present in the screenshot; country of origin of content present in the screenshot; language of content present in the screenshot; currency of content present in the screenshot; web domain of content present in the screenshot; and web domain of an originator email address present in the screenshot.

In an embodiment, the method comprises instantiating parallel instances of a backend comprising the backend controller, the risk classification model, the prompt selector, the format parser; wherein a backend instance is instantiated for each input transactional request.

In an embodiment, the parallel backend instances are run in parallel by one or more CPUs.

In an embodiment, the risk classification model of each parallel backend instance is run in parallel by one or more GPUs.

In an embodiment, the LVM or LVMs are run in parallel by one or more GPUs.

In an embodiment, the parallel backend instances are stateless.

In an embodiment, the parallel backend instances are arranged to be independent of an application or website user.

In an embodiment, the sending of the input data record and input screenshot, from the transaction processing application, to the backend controller, comprises verifying image resolution of the input screenshot before sending the input screenshot to the Large Vision Model, LVM.

The present disclosure also relates to a computer system for detecting a malicious application or website by a transaction processing application, the system configured to carry out the computer-implemented method according to any of the disclosed methods.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of the disclosed system.
**Figure 2****:** Schematic representation of an embodiment of the disclosed system.
**Figure 3****:** Functional diagram illustrating a programmed computer system, for supporting an exemplary embodiment.

### DETAILED DESCRIPTION

The present disclosure relates to a computer-implemented method for detecting a malicious application or website by a transaction processing application, and computer system thereof, wherein the transaction processing application is, respectively, a mobile device application or a website transaction processing gateway, including sending an input screenshot and a feature-extraction prompt string, from a backend controller, to a Large Vision Model, LVM.

The present disclosure relates to a system and method that allows non-experts to efficiently evaluate content in both textual and visual format, with the objective of detecting a set of domain-expert defined features or signals.

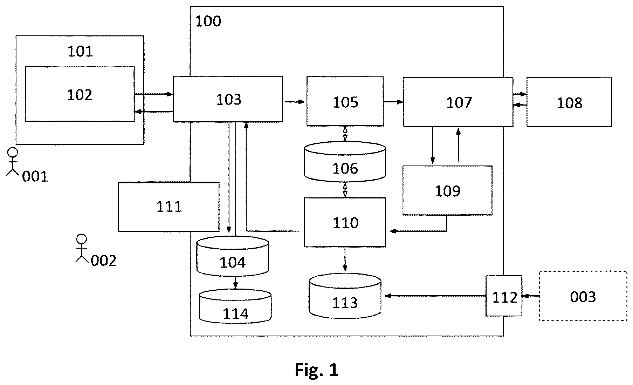

**Figure 1** schematically represents an embodiment of the disclosed system, where: **001** represents an end user; **002** represents an administrator; **003** represents an external component; **100** represents a backend of the present disclosure; **101** represents a device of the end user; **102** represents a client of the present disclosure; **103** represents a controller of the present disclosure; **104** represents requests Database (DB), i.e., a DB for storing request prompts sent by the end user; **105** represents a prompt manager; **106** represents a Risk Ruleset (a risk configuration DB); **107** represents a Model Repository Connector (a provider connector); **108** represents a Model Repository (a model provider) and comprises any given model; **109** represents a Format Result Validation (an hallucination mitigation) module; **110** represents a Risk Classification Model (an intelligence engine); **111** represents a management console; **112** represents; an Application Programming Interface (API) of the present disclosure; **113** represents a detections DB, i.e., a database with registered detections; and **114** represents a feedback DB.

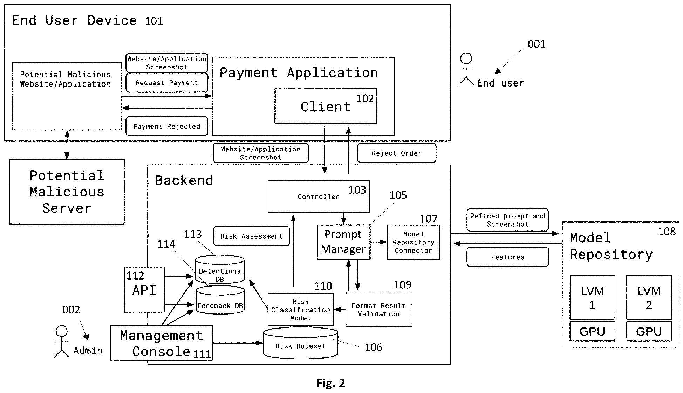

**Figure 2** represents another embodiment of the disclosed system, with emphasis on information exchange between major elements (device of the end user, backend, model repository).

In an embodiment, a Model Repository Connector (provider connector) **107** is a connector that connects to a model repository providing one or more models, in particular, providing one or more Large Vision Models (LVMs).

The following pertains to the Overview of the present disclosure. The main objective of the present disclosure is to automatically perform a risk classification of a text document, an image or set of images. The general workflow, as described in **Figure 1** and in **Figure 2**, as exemplary embodiments, is herein presented.

In an embodiment, the end user connects to a potential malicious website or application, served by a potential malicious server. The payment application receives a request of payment, accompanied with a screenshot of the website or application. This payment is sent by the Client to perform a risk assessment of this website or application screenshot, awaiting for the response given by the Backend.

In an embodiment, the request is received on the Backend **100** by the Controller **103** the entry point of the requests **001.** This component validates the request, stores it in a database **104** for potential later usage, and initiates the analysis process described below.

In an embodiment, the Prompt Manager **105** generates the prompt to send to the model. This prompt is built automatically based on the configuration specified by the system administrator. Once this prompt is prepared, it is sent to the Model Repository Connector **107.** This module is responsible for preparing the request to be sent to the generative model, as different providers have specific requirements regarding the formatting of the prompt and response generation parameters (e.g., temperature, maximum number of tokens to generate, random seed, etc.). The Model Repository Connector **107** then sends a request comprising the correctly formatted prompt, generation parameters and the user-provided images to the Model Repository **108** receiving its response.

Once the model's response is received from the Model Repository, it is analyzed by the Format Result Validation **109** which attempts to detect and reduce the amount of format errors in the model's response. Details regarding the functioning of this module are described further herein. Once the validity of the response is confirmed, it is passed on to the Risk Classification Model 110. In this step, the information extracted by a LVM is evaluated by the Risk Classification Model 110, which will produce a Risk Assessment based on the defined Risk Ruleset **106.** After this, the controller **103** prepares the response to be sent to the Payment Application who receives said response on the client **102.** Finally, the end user **001**, as an optional step, provides feedback regarding the quality of the detection using the client **102**. Thanks to this feedback, the administrator **002** can later use it to improve the detection capabilities of the system.

Other workflows happen in parallel to the main workflow previously described. The administrator **002** also controls, configures and/or analyzes various processes of the disclosed system through the Management Console **111**. This console is a web application where the administrator **002** defines the Risk Rulesets **106** that is, the features to be identified and the conditions that define the response given to the user. At the same time, the administrator **002** has access to every database, enabling said administrator to perform any audit related task that is necessary to understand the working of the system and evaluate and improve its performance.

Finally, the present disclosure offers an API **112**, to automatically access any information produced by the system. This allows the integration of this system with external components **003**, such as, for instance another detection system that uses the outputs of the present disclosure, a monitoring system to validate the proper functioning of the system, or any other third party system that makes use of the outputs of the present disclosure.

The following pertains to the backend of the disclosed system. In an embodiment, this part of the system contains most of the logic and connections to external parties. The backend of the present disclosure, **100**, receives the requests from the users, routes them to the appropriate components, and builds the prompts to be sent to the model of the model provider, **108**. The model's output is then analyzed, informing the Payment Application with an adequate response. This system also stores all information regarding its configuration and user requests, allowing the administrator, **002**, or automated third parties, **003**, through an API, **112**, to access this data and use it to improve future interactions with said embodiment.

The following pertains to the controller of the backend of the present disclosure. In an embodiment, the controller, **103**, is the entry point for every application request. These requests contain the input provided by the end user, **001**, comprising one or more images, or, additionally or alternatively, a piece of text or a document to be analyzed.

In an embodiment, the main task of this component is to receive and validate requests from the application. This module ensures that the requests contain the necessary data, and that it is provided in the correct format. In particular, in the case of an image, this process involves validating that its format is compatible with the system and ensuring that the image has sufficient resolution for information extraction. This is a crucial step, since low resolution input can lead to poor image comprehension by the LVM [6]. In the case of a text input, the system runs a spell-check on the user input, as typographical errors have been shown to reduce an LLMs performance when compared to the same input without said mistakes [57]. Once the validation step is completed, the images or text input is propagated throughout the system.

In an embodiment, the requests received by the controller, **103**, are stored on a database. Storing this information extends the capabilities of the disclosed system in the following ways. First, it allows said system to offer audit features: the administrator, **002**, can access key information, such as how many requests were performed, by which users, and at which specific times. This information is critical for other tasks, better defining the required infrastructure dimension, error investigations, etc. Second, storing this information allows for improvements on the system itself: a better understanding of the requests being received is useful to improve the prompts generated by the Prompt Manager, **105**, as well as the decisions taken by the Risk Classification Model, **110**. For instance, if the requests the system receives contain both text and images, but, in a certain use-case (i.e., evaluating product listings), the relevant information is only present in the images, the prompts and risk ruleset are adjusted to request the model to consider only the visual information, ignoring the text.

In an embodiment, once the request information is stored, the data is propagated to the Prompt Manager, **105**. Once the system processes the request and obtains a response from the Model Provider, **105**, the response is evaluated by the Format Result Validation and then by the Risk Classification Model **110**, forwarding the Risk Assessment to the Controller, **103**, which forwards it to the Client, **102**. This response contains the detected signals, as well as an explanation of why they were highlighted. Optionally, the response may also contain recommendations and next steps for the end user, **001**, to follow, as well as any other information the administrator, **002**, has defined (e.g., a summary or a risk indicator). The functioning of the system and each of its components will be covered in more detail in the present disclosure.

The following pertains to the prompt manager of the backend of the present disclosure. In an embodiment, Large Vision Models (LVMs) and Large Language Models (LLMs) require a textual input - the prompt - to initiate their response. This interaction initiates a dialogue where the model uses its pre-trained knowledge of language patterns to produce relevant and coherent outputs based on the input received. For these models to provide an adequate analysis and response for the task at hand, effective prompting is essential. Simple phrasing changes, or the introduction of an additional phrase at the end of a prompt significantly affect the performance of the model [30]. Furthermore, the inclusion of task-relevant information within the prompt, often referred to as Retrieval-Augmented Generation (RAG), has been shown to aid the model in producing significantly better responses. As such, the main responsibility of the Prompt Manager, **105**, is the construction of an informative prompt, so that the model accurately performs the task defined by the administrator, **002**, given the Payment Application input.

In an embodiment, the input to the model is composed by two separate parts: the website or application screenshot and the prompt text. Depending on the use case, the input is either an image, or set of images to analyze. The prompt text describes the task to perform, including examples and restrictions to aid the model in successfully performing the analysis task. The prompt is built as follows.

First, a general contextualization and description of the problem at hand is provided to the model. Should the use case be related to detecting potential non-compliant instances of a given method, system or behaviour, the prompt will provide this information to the model. On the other hand, if the use case is related to finding relevant information, namely indicators of malicious signals, the prompt would describe that task accordingly. This allows the LVM to prioritize task-related knowledge obtained in training when generating its output.

Once the general problem contextualization is set, a more detailed description of the specific task to perform is provided, defined by the administrator **002**. The administrator **002** has the responsibility of defining, via the management console **111**, the features to detect within the user-provided input. These definitions can be as granular as considered necessary by the administrator **002** for the use case at hand. In the task of non-compliant instance detection, the administrator **002** may define a vaguer feature to detect, such as "suspiciously high prices" or "identical operations and/or commands", thus leaving it up to the model to determine what constitutes a "suspiciously high price" or an "identical operation and/or command", based on its training knowledge. Alternatively, the administrator **002** defines this feature in a more detailed and rigid fashion, indicating a specific threshold with a sentence similar to "prices above X euros". In this case, the model would primarily use the administrator's **002** task-related knowledge to produce its generation, constituting a RAG approach.

Another relevant aspect to define in an exemplary embodiment is the output format. While these models will respond in text format, the large corpus of data the models are trained on are a good dataset for requesting responses to be formatted in a more structured way, such as JSON format, for instance. Requesting a specific output format allows the disclosed system to enforce a predefined structure for the responses, such as, for instance, asking for the identified features to be provided in a list, along with the description of each detection. This structure is verified by the Format Result Validation component **109**, making sure the agreed structure is respected. In this way, the information is provided to the Risk Classification Model **110**, in a predictable format, for example, in a table.

As stochastic models, large generative models have been known to suffer from "hallucinations": the introduction of false or misleading information within the model's response [31]. With the objective of detecting and mitigating these issues, in particular with respect to the format, the Format Result Validator, **109**, is also present, which analyzes the response of the model *a posteriori.* Complementarily, certain restrictions or instructions are provided to the model, to aid in preventing hallucinations. As mentioned previously, including the administrator's, **002,** task-specific knowledge within the prompt significantly reduces the likelihood that the model will provide an incorrect response based on its training data. More complex measures ensure that task-specific information is provided to the model. For instance, the prompt may include use case-relevant examples of previous high-quality responses, guiding the model to produce similar outputs. Finally, the system also leverages the model's awareness of its own uncertainty with regards to a given task by encouraging it to respond with "No features were found" if it determines that not enough information is available.

Once the prompt is ready, it is sent along with the text or set of images to analyze to the Model Repository Connector, **107**, component.

The following pertains to the Model Repository Connector of the backend of the present disclosure. In an embodiment, the Model Repository Connector, **107**, component encapsulates the logic needed to abstract the different LLMs or LVMs providers from the rest of the system. The main objective of this component is to manage the connection between the disclosed system, i.e., the backend, **100**, with the model provider, **108**, in use, building the corresponding HTTP request as defined by their API. This involves sending all the necessary parameters, as defined by each model provider, **108**, such as authentication or format restrictions, and handling the response of the model, validating that it was correctly generated (e.g., ensuring that no connection issues took place, or that generation was not impeded by content filters). Once the response is validated, the last step requires extracting the received information and its metadata. This includes the model's response, the response's latency, or the generation cost associated with the request. This information is critical in order to monitoring the operational costs and effectiveness of the system.

In an exemplary embodiment, the disclosed system is isolated from a specific model provider, **108**, used at a given time, allowing for the replacement or adjustment of only this component if a new, more relevant model provider, **108**, offers a more suitable model (e.g., a cheaper model, a more performing one, a more adequate for the task...). This ensures that the disclosed system does not become outdated or cost-ineffective by being adapted to a specific LLM or LVM.

In an embodiment, there is also the possibility of using different model providers, **108**, depending on the user's request. In this scenario, the administrator, **002**, would need to define, through the management console, **111**, which model provider, **108**, is used for a given request. For instance, certain use cases are better suited for a particular model, while others benefit from the capabilities of a different one. All of these options are configured on the Management Console, **111**.

In an embodiment, once the response is obtained by the Model Repository Connector, **107**, it is routed to the next component: the Format Result Validation, **109**.

The following pertains to the format result validation of the backend of the present disclosure. In an embodiment, the Format Result Validation, **109**, serves to detect any factually incorrect information in the model's response regarding the expected format, and, in the event of an hallucination, said module, **109**, triggers measures to produce an accurate response by adding additional clauses to the prompt and requesting another generation by the prompt manager. Note that the likelihood of an hallucination is already significantly reduced by previous steps in the of the backend, **100**, namely, by ensuring that the user-provided images are of sufficiently high resolution, and that any text input is free of typographical errors, as performed by the controller, **103**, and the use of a thoroughly engineered prompt containing additional domain-specific knowledge defined by the administrator, **002**, as performed by the prompt manager, **105**, with or without Retrieval-Augmented Generation (RAG).

In an embodiment, the first step is invalid format detection, which integrates one or more post-generation detection methods. A possible implementation is to utilize a parser to validate that the text response adheres to the expected format. One embodiment is a JSON parser validating the format of the response, based on the JSON definition. Another embodiment validates that the response is an array containing the extracted features in its proper format.

In an embodiment, should any validation be detected, different approaches may be taken to mitigate the hallucinations. In an extremely conservative approach, the system refrains from providing a response altogether, informing the payment application that it was unable to reach a conclusion. Alternatively, under the same conditions, the system attempts to produce an accurate response by sending the same prompt to progressively more powerful models, **108**, until the response passes the format result validation, e.g., hallucination steps. Finally, in another embodiment, the system restarts the generation process again with altered model parameters, promoting more factual generation by manipulating the values of generation parameters, such as top-k or top-p, which can be user-defined even in closed-source models.

In an embodiment, if a generated response passes the format result validation step, this system outputs the detected features, which are then passed on to the Risk Classification Model **110**.

The following pertains to the Risk Classification Model of the backend of the present disclosure. In an embodiment, the generative model functions primarily as a feature extractor, acting on the set of images and/or text provided by the end user, **001.** To complement this extraction, the Risk Classification Model, **110**, is introduced, and is responsible for combining the different detected signals in order to construct a risk assessment to provide a response.

In an embodiment, the steps involved in the extracted features' processing are defined by the administrator, **002**, through the management console, **111**, and are then stored in the risk ruleset, **106.** In this, the administrator, **002**, defines a set of rules that, based on the extracted features, build a risk assessment, with response in one way or another.

In an exemplary embodiment of a misconduct detection use case, where the system is analyzing potential red flags appearing in a website or application, different responses are provided depending on the number of features identified. In a response for this scenario, the administrator, **002,** defines, via the management console, **111**, a set of rules, such as "one single malicious feature is considered a low risk, two malicious features are considered a medium risk, three or more are considered high risk" as a response provided to the payment application, based on the mentioned risk ruleset.

In another embodiment, other more complex rules are also created, for instance, by combining different extracted signals to create a more elaborate response. In a use case, one potential rule the administrator, **002,** creates is the detection of both "small letters / hard to read messages" with "Y axis truncation". In this case, the combination of both signals may point to a higher intent of misinformation, and thus indicates a risk than just the individual indication of each signal.

In another embodiment of this component, instead of a set of rules, the administrator alternatively uses more advanced risk classification systems, such as statistical models or machine learning models (e.g., LightGBM, Neural Networks, etc), which receive the features extracted by the generative model as input to produce the corresponding risk assessment.

Once the final response is complete, both the input and the output are stored on the Detections DB, **113**, both for audit and future improvement objectives. Storing the original inputs that generated the response is crucial to understand the final output provided to the users. At the same time, to increase the performance of the system, it is vital to have a corpus of data to work with.

Finally, once the information is stored, it is propagated back to the controller, **103**, component, which then returns this information to the client, **102**, returning it to the payment application.

The following pertains to the management console of the backend of the present disclosure. In an embodiment, the management console, **111**, is the central component to configure and control the correct functioning of the system disclosed herein. Only the administrator, **002**, has access to this console, namely a web application in which they define the configuration of the system as well as any monitoring, among other management related tasks. In particular, the Management Console offers:
Feature definition, wherein the administrator, **002**, must define, via the management console, **111**, which features must be detected by the corresponding model. These definitions differ between use cases. In this configuration, the administrators define both the description of features to detect, as well as the name associated to each detection;
Risk ruleset definition, wherein the Administrator, **002**, defines how the detection of individual features is combined to generate a response for payment application;
User management, wherein the administrator, **002**, performs user management, in particular regarding the billing and quotas applicable to each end users, **001**;
Model management, which is related to the user management, where the generative models available to the payment applications are configured. Any required parameter by these models, such as authentication tokens or generation parameters (e.g. temperature) are be defined in the management console, **111**;
System monitoring, to ensure the correct operation of the system, such as providing different dashboards and visualizations to be monitored and used by the administrator, **002**; and
Requests and detection audition, where the system also offers the possibility of reviewing past events, which is crucial to investigate previous events and to learn from them to improve the system's functioning.

The following pertains to the Application Programming Interface (API) of the backend of the present disclosure. In an embodiment, the API, **112**, component allows for the integration of the disclosed system with other components or even with third parties. With this component, access to all of the stored data is guaranteed to API users, as well as the decisions performed by the disclosed system.

In an embodiment, there are multiple uses for the information supplied by the API, namely:
The monitoring of the disclosed system: To continuously ensure the correct functioning of the system, multiple monitoring solutions are integrated through the API, **112**. These other systems will periodically query the system, requesting information of its status and gathering the necessary information to guarantee the correct operation of the disclosed system;
The connection with other advanced detection systems: There are certain external systems that may indirectly benefit of the outputs obtained by the present disclosure. For instance, in a scam detection use case, the analysis performed by the disclosed system of a listing is used as an input by a system for the detection of non-compliant transactions, increasing its accuracy;
The retraining or adjustment of the disclosed system: With this API, **112**, the administrator, **002,** could automatically extract the system information to run external validations or experiments to improve current risk strategy, based on the input data and the detection performed;
For third Party clients: Some customers may prefer to have their own proprietary client facing solution instead of a Client, **102**, on a device, **101**, as this may allow the integration with other workflows, or the inclusion of extra information in the response shown to the end user, **001**. The API of the present disclosure, **112**, could enable this connectivity; and
For third Party usage: Other systems may benefit from having access to information contained within the disclosed system, not only regarding a specific detection but also regarding aggregated information. For instance, in the listing analysis example, the volume or the frequency at which a website's listings are being analyzed may provide valuable insights with respect to which offers are more or less trusted by the users, which may be of interest for third party companies.

It is noted that this is not an exhaustive list of possible use cases for the API, **112**, and other use cases may also benefit from the ability to automatically access the system's information.

The following pertains to the Requests DB of the backend of the present disclosure. In an embodiment, this database, **104**, stores the text, image or set of images to be analyzed, along with a user identifier, timestamp and any other relevant metadata pertaining to the request.

In an embodiment, the main purpose of this database, **104**, is to facilitate the system's monitoring, which is of special interest to the administrator, **002**. With this information, the administrator, **002**, can monitor the current and past load of the system, enabling them to properly adjust the system's infrastructure, or check its correct ongoing operation. This information can also provide insights into how the payments applications use the platform (what kind of inputs they sent, how often, etc), enabling the administrator, **002**, to adapt the Risk Ruleset, **106**, accordingly.

This database also offers audit properties, allowing the administrator, **002**, to validate or review specific past cases, investigate potential system malfunction, or understand individual past requests in detail.

The following pertains to the Feedback DB of the backend of the present disclosure. In an embodiment, the feedback provided by the payment application is stored in Feedback DB, **114**. An embodiment would be a collection of data which includes: an evaluation over the quality of detection performed by the disclosed system in the form of a numerical rank (i.e., a value between 1 and 5) or a binary indicator (i.e., a "correct" or "incorrect" label), the payment application identifier and the timestamp of that feedback along with any other metadata pertaining to the request, and, associated with this data, the information that allows to relate it with the original detection that caused this feedback, such as a detection identifier. Nevertheless, the information regarding the detection itself would be stored on the Detections DB, **113**.

Some more advanced feedback could be included in other embodiments, such as a set of fields that allow the payment application to indicate the quality of the specific features or detected red flags, or a free text form where the end user could provide as many details as they consider relevant.

In an embodiment, this feedback can then be processed by the administrator, **002,** who may use these evaluations to adapt the system to increase the quality of its responses. For instance, if a certain detection is receiving continuous negative feedback, the risk ruleset associated with it may need to be adapted or even removed for that specific detection. Analogously, the administrator, **002,** can also observe and monitor the correct operation of the system in the case of receiving positive feedback.

The following pertains to the Risk Ruleset of the backend of the present disclosure. In an embodiment, the Risk Ruleset storage, **106**, contains two sets of information: the features to identify within a request and the definition of how these detections must be conditionally combined, and the risk assessment response associated with the fulfilment of these conditions and the response associated with its lack of fulfilment.

In an embodiment, the feature definition consists of a name as well as a detailed description of the elements that the model must detect. These definitions are provided by the administrator, **002,** and they are to be inputted as detailed as possible. This description will be included by the Prompt Manager, **105**, in the prompt sent to the model. As such, clear and unambiguous descriptions of the features to be extracted are crucial to ensure the best possible results. For instance, in the scam detection use case, a potential feature definition could be "search for hidden costs, such as high delivery costs or payment fees", providing the model with domain-expert knowledge on what it needs to detect.

In an exemplary embodiment, regarding a use-case for the detection of transactional misconduct, in which the features to be extracted are potential red-flags, an example of such a rule is a simple count: "if certain number of red-flags are detected, respond with the corresponding text". More complex operations are possible, such as grouping the red-flags by type (e.g., "if certain amount of type X and another set of Y are detected, respond with Z"). These operations are only limited by the typical logical and arithmetic operators, providing a lot of flexibility to the administrator, **002**.

The following pertains to the Detections DB of the backend of the present disclosure. In an embodiment, the Detections DB, **113**, serves as storage for every image, document, or text input and the corresponding set of extracted features, along with the final response provided to the user.

In an embodiment, the primary goal of this storage, **113**, is to keep track of every analysis performed by the system. This allows the administrator, **002**, to monitor and study the system's functioning. This information is crucial to iterate and maintain the detection capabilities of the system, as it serves as a training and testing corpus for later updates and adjustments.

In an embodiment, this data may also be useful for other systems or third-party components integrated via the system's API, **112**. For instance, a monitoring system or an advanced detection system may benefit from this information, as disclosed herein.

The following pertains to a Client of the present disclosure. In an embodiment, the client **102** serves the function of receiving a request from the payment application, and then provides the system's response. One embodiment may be a web page, on which the payment application can upload the images, documents and/or files to be analyzed. This information is then sent to the backend of the disclosure, **100**, which analyzes the input and provides the final answer containing the system's analysis. This information is then used by the payment application, highlighting the detected features and the risk assessment and the recommendation action. In another embodiment, the payment application accepts or rejects the payment based on this risk assessment.

The following pertains to a Model Repository of the present disclosure. The training of Large Language or Vision Models requires, as their name suggests, a large curated dataset and powerful infrastructure. These requirements make developing and maintaining a proprietary, dedicated large generative model a costly task to perform by a non-specialized company. An embodiment proposes the integration with third parties which already offer these trained models, **108**. Some of these third-party providers also offer the option to adapt and fine tune these models to the specific business case.

In an embodiment, the Model Repository **108** represents a third party which offers access to pre-trained Large Language Models or Large Vision Models. These providers offer an API where the user sends a request containing a prompt, and then obtains the generated output. Along with the prompt, some other information may be required, for instance, an authorization token allowing the system to make these requests, or certain parameters related with the generation process, such as the maximum number of tokens to generate or the specific version of the model to use.

In an embodiment, each of these providers requires a specific format for the requests and its parameters, creating the need for a dedicated component, the Model Repository connector 107, which is responsible for handling these connections and their required configurations.

In the present disclosure, the usage of a third-party model provider is considered as the default option, as the process of hosting a private model may be unfeasible for many applications. However, if privacy or regulation concerns exist, or the requirements for hosting the model are met, the model is an internal component of the system.

The following pertains to the administrator of the disclosed system. In an exemplary embodiment, the administrator, **002**, is responsible for the system's configuration as well as its monitoring. Any administrator of the disclosed system, **002**, needs to be a use case expert, as the main tasks of this role are the customization of the features to extract/identify, as well as rules for how these features must be combined and reported to the end user, **001**. In the use case of scam detection, these administrators, **002**, are expected to be experts on misconduct on transactional records that understand how these scams and misconducts are perpetrated, in order to be able to define the rules to detect them.

In an embodiment, the administrators, **002**, may also define different system configurations, such as the available models, which of them must be applied to which requests, limits on the billing and quota, etc. All these configurations are specified via the Management Console, **111**.

In another exemplary embodiment, the administrators, **002**, also carry out all the required system monitoring. As previously described, these observability tasks are also managed on the Management Console, **111**, where the administrators, **002**, may assess the ongoing operation of the system, either from a general perspective or by studying specific cases.

The following pertains to an end user of the disclosed system. In an exemplary embodiment, the end user, **001**, is the service's consumer, which may vary according to the use case of the present disclosure. Some examples are provided. In the scam detection use case, the end user, **001**, is a customer of the payment application providing scam prevention services. In another use case, the end user, **001**, is possibly a person interpreting the graph or image to analyze. In any case, the end user, **001**, does not need to possess advanced technical knowledge, as their interaction with the client, **102**, is very intuitive and simple, being limited to uploading the information to analyze and receiving its results.

The present disclosure relates to a system designed to assist payment applications in accurately and efficiently analyzing complex multi-modal information. This system leverages both domain-expert insights as well as state-of-the-art Large Vision Models (LVMs) and Large Language Models (LLMs), in order to detect and interpret specific features and signals within text documents and images.

The architecture of the disclosed system integrates several key components to deliver reliable results. In an embodiment, the client, **102**, offers an interface for applications to submit their data for analysis, while the backend, **100**, processes these inputs through a series of components. These include a controller, **103**, which validates the format of the introduced information; a prompt manager, **105**, which generates a prompt designed to maximize the accuracy of the model's feature extractions based on a domain-expert's knowledge; and a format result validation module, **109**, which minimizes the potential for errors, and the risk classification model to provide the risk assessment. This backend infrastructure ensures that user requests are handled efficiently, prioritizing the accuracy of the provided answer.

Moreover, the management console, **111**, provides the administrator, **002,** with comprehensive control over system configurations, feature definitions, and user management, ensuring that the present disclosure is tailored to specific use cases and that it is maintained effectively. Thanks to the feedback collected from the end users, the disclosed system allows the administrator, **002,** to maintain the system detection capabilities. The modular and scalable design of the disclosed system also allows for continuous improvements and adaptability to new challenges, a particularly important ability in highly dynamic use-cases such as the detection of illicit transactions in a record of transactions, where solutions may often become obsolete, due to changes in their environment. The combination of the backend processes, audit features, and modular components makes the present disclosure a robust tool for various applications, from misconduct detection to legal document analysis, to name some use-cases. Therefore, the present disclosure democratizes access to complex information analysis, enabling users to make informed decisions quickly and accurately.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The present disclosure is also particularly apt for execution on a GPU - graphics processing unit (a specialized processor explicitly designed for executing graphical algorithms), NPU - neural processing unit (a specialized processor explicitly designed for executing machine learning algorithms), or any other inherently parallel processing unit. For example, models were run on a Linux PC with Intel Xeon CPU cores and a NVIDIA GeForce RTX. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

A computer data processor, as used herein, refers to any system, device, or apparatus capable of processing data in accordance with the methods described in this disclosure. The computer data processor may include one or more processors, such as a central processing unit (CPU), a graphics processing unit (GPU), or any combination thereof. These processors may be implemented as a single chip, a multi-core processor, a distributed computing system, or any other suitable configuration. For example, this can be a central processing unit (CPU), such as an Intel^{®} Core^{™} i7 processor, and memory modules, including 16 GB of DDR4 RAM. The system may include a solid-state drive (SSD) as a non-volatile memory for storage, one or more optional GPUs (e.g., NVIDIA^{®} GeForce RTX^{™} 3060), and runs a standard operating system, such as Microsoft^{®} Windows^{®} or Linux^{®}. For example, this can be an embedded system utilizing a microcontroller, such as the ARM^{®} Cortex^{®}-M4 processor, with onboard memory (e.g., 1 MB of flash storage and 256 KB of SRAM). For example, this can also be a cloud-based virtual machine hosted on a server infrastructure, such as an Amazon Web Services (AWS) EC2 instance, featuring virtual CPUs (vCPUs) based on Intel^{®} Xeon^{®} or AMD EPYC^{™} processors. The instance can be configured for example with 32 GB of RAM, 1 TB of elastic block storage (EBS), and executes server-side software designed to perform the computational processes disclosed in this specification.

In exemplary embodiments, the models were executed on a computing system comprising a Linux-based operating environment, Intel^{®} Xeon^{®} multi-core central processing units (CPUs), and a NVIDIA^{®} GeForce^{®} RTX-series GPU. The use of such parallel processing or neuronal network processing units enables a significant reduction in computational latency and an improvement in throughput for the training and inference stages of the disclosed models. Significantly, the disclosed architecture is inherently suited for implementation by parallel processing or neuronal network processing units.

Consequently, the invention leverages the architectural advantages of parallel processing to achieve enhanced computational efficiency, scalability, and responsiveness, thereby addressing the technical problem of optimizing resource utilization in high-dimensional machine learning tasks.

The computer data processor may further include memory (e.g., random access memory (RAM), read-only memory (ROM), flash memory, or other suitable storage devices) for storing instructions and data. The processor executes instructions stored in memory to perform the functions described in this specification. The instructions may be implemented in any programming language, including but not limited to assembly language, C, C++, Python, or Java.

The computer data processor may communicate with input/output devices (e.g., a keyboard, mouse, touchscreen, or display), peripheral devices, or external systems via wired or wireless connections, such as USB, Bluetooth^{®}, Wi-Fi^{®}, or Ethernet. The data processor may also be integrated with or connected to a network, including a local area network (LAN), wide area network (WAN), or the internet, to receive and transmit data.

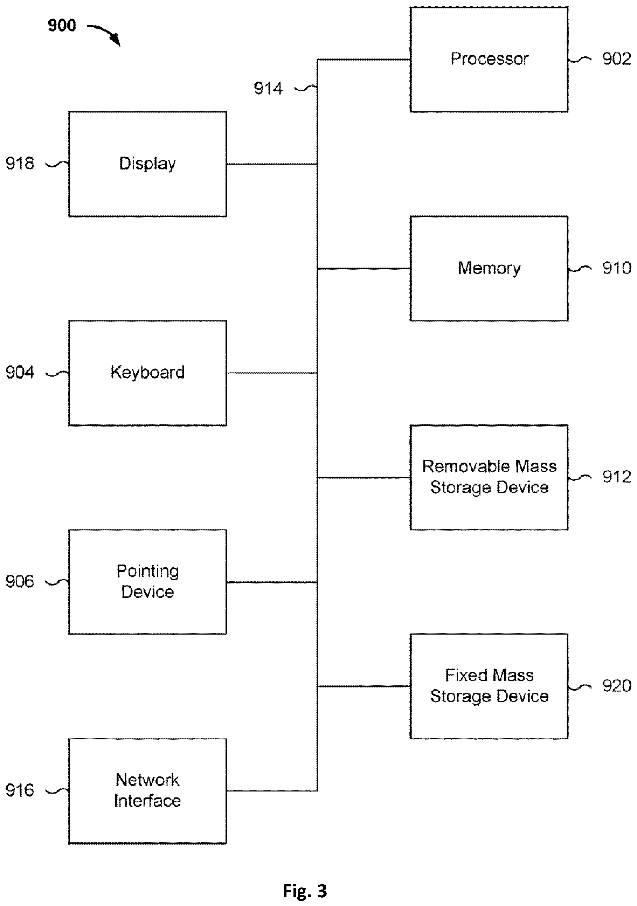

**Figure 3** is a functional diagram illustrating a programmed computer system for supporting real-time sliding windows can be implemented in accordance with some embodiments. As will be apparent, other computer system architectures and configurations can be used to perform the described techniques. Computer system 900, which includes various subsystems as described below, includes at least one microprocessor subsystem (also referred to as a processor or a central processing unit (CPU) **902**). For example, processor **902** can be implemented by a single-chip processor or by multiple processors. In some embodiments, processor **902** is a general purpose digital processor that controls the operation of the computer system **900**. In some embodiments, processor **902** also includes one or more coprocessors or special purpose processors (e.g., a graphics processor, a network processor, etc.). Using instructions retrieved from memory **910**, processor **902** controls the reception and manipulation of input data received on an input device (e.g., pointing device **906**, VO device interface **904**), and the output and display of data on output devices (e.g., display **918**).

Processor **902** is coupled bi-directionally with memory **910**, which can include, for example, one or more random access memories (RAM) and/or one or more readonly memories (ROM). As is well known in the art, memory **910** can be used as a general storage area, a temporary (e.g., scratch pad) memory, and/or a cache memory. Memory **910** can also be used to store input data and processed data, as well as to store programming instructions and data, in the form of data objects and text objects, in addition to other data and instructions for processes operating on processor **902**. Also as is well known in the art, memory **910** typically includes basic operating instructions, program code, data, and objects used by the processor **902** to perform its functions (e.g., programmed instructions). For example, memory **910** can include any suitable computer readable storage media described below, depending on whether, for example, data access needs to be bi-directional or unidirectional. For example, processor **902** can also directly and very rapidly retrieve and store frequently needed data in a cache memory included in memory **910**.

A removable mass storage device **912** provides additional data storage capacity for the computer system **900**, and is optionally coupled either bi-directionally (read/write) or unidirectionally (read only) to processor **902**. A fixed mass storage **920** can also, for example, provide additional data storage capacity. For example, storage devices **912** and/or **920** can include computer readable media such as magnetic tape, flash memory, PC-CARDS, portable mass storage devices such as hard drives (e.g., magnetic, optical, or solid state drives), holographic storage devices, and other storage devices. Mass storages **912** and/or **920** generally store additional programming instructions, data, and the like that typically are not in active use by the processor **902**. It will be appreciated that the information retained within mass storages **912** and **920** can be incorporated, if needed, in standard fashion as part of memory **910** (e.g., RAM) as virtual memory.

In addition to providing processor **902** access to storage subsystems, bus **914** can be used to provide access to other subsystems and devices as well. As shown, these can include a display **918**, a network interface **916**, an input/output (I/O) device interface **904**, a pointing device **906**, as well as other subsystems and devices. For example, image processing device **906** can include a camera, a scanner, etc.; VO device interface **904** can include a device interface for interacting with a touchscreen (e.g., a capacitive touch sensitive screen that supports gesture interpretation), a microphone, a sound card, a speaker, a keyboard, a pointing device (e.g., a mouse, a stylus, a human finger), a Global Positioning System (GPS) receiver, an accelerometer, and/or any other appropriate device interface for interacting with system **900**. Multiple VO device interfaces can be used in conjunction with computer system **900**. The VO device interface can include general and customized interfaces that allow the processor **902** to send and, more typically, receive data from other devices such as keyboards, pointing devices, microphones, touchscreens, transducer card readers, tape readers, voice or handwriting recognizers, biometrics readers, cameras, portable mass storage devices, and other computers.

The network interface **916** allows processor **902** to be coupled to another computer, computer network, or telecommunications network using a network connection as shown. For example, through the network interface **916**, the processor **902** can receive information (e.g., data objects or program instructions) from another network, or output information to another network in the course of performing method/process steps. Information, often represented as a sequence of instructions to be executed on a processor, can be received from and outputted to another network. An interface card or similar device and appropriate software implemented by (e.g., executed/performed on) processor **902** can be used to connect the computer system **900** to an external network and transfer data according to standard protocols. For example, various process embodiments disclosed herein can be executed on processor **902**, or can be performed across a network such as the Internet, intranet networks, or local area networks, in conjunction with a remote processor that shares a portion of the processing. Additional mass storage devices (not shown) can also be connected to processor **902** through network interface **916**.

In addition, various embodiments disclosed herein further relate to computer storage products with a computer readable medium that includes program code for performing various computer-implemented operations. The computer readable medium includes any data storage device that can store data which can thereafter be read by a computer system. Examples of computer readable media include, but are not limited to: magnetic media such as disks and magnetic tape; optical media such as CD-ROM disks; magneto-optical media such as optical disks; and specially configured hardware devices such as application-specific integrated circuits (ASICs), programmable logic devices (PLDs), and ROM and RAM devices. Examples of program code include both machine code as produced, for example, by a compiler, or files containing higher level code (e.g., script) that can be executed using an interpreter.

The computer system shown in **Figure 3** is but an example of a computer system suitable for use with the various embodiments disclosed herein. Other computer systems suitable for such use can include additional or fewer subsystems. In some computer systems, subsystems can share components (e.g., for touchscreen-based devices such as smart phones, tablets, etc., VO device interface **904** and display **918** share the touch sensitive screen component, which both detects user inputs and displays outputs to the user). In addition, bus **914** is illustrative of any interconnection scheme serving to link the subsystems. Other computer architectures having different configurations of subsystems can also be utilized.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

### References

[1] Holistic evaluation of language models. https://crfm.stanford.edu/helm/lite/latest/#/ leaderboard. Accessed: 2024-04-16.
[2] J. Achiam, S. Adler, S. Agarwal, L. Ahmad, I. Akkaya, F. L. Aleman, D. Almeida, J. Altenschmidt, S. Altman, S. Anadkat, et al. Gpt-4 technical report. arXiv preprint arXiv:2303.08774, 2023.
[3] J.-B. Alayrac, J. Donahue, P. Luc, A. Miech, I. Barr, Y. Hasson, K. Lenc, A. Mensch, K. Millican, M. Reynolds, et al. Flamingo: a visual language model for few-shot learning. Advances in neural information processing systems, 35:23716-23736, 2022.
[4] J. Bai, S. Bai, S. Yang, S. Wang, S. Tan, P. Wang, J. Lin, C. Zhou, and J. Zhou. Qwen-vl: A frontier large vision-language model with versatile abilities. arXiv preprint arXiv:2308.12966, 2023.
[5] D. Bautista and R. Atienza. Scene text recognition with permuted autoregressive sequence models. In European conference on computer vision, pages 178-196. Springer, 2022.
[6] T. Brown, B. Mann, N. Ryder, M. Subbiah, J. D. Kaplan, P. Dhariwal, A. Neelakantan, P. Shyam, G. Sastry,A. Askell, et al. Language models are few-shot learners. Advances in neural information processing systems,33:1877-1901, 2020.
[7] H. Feng, Q. Liu, H. Liu, W. Zhou, H. Li, and C. Huang. Docpedia: Unleashing the power of large multimodal model in the frequency domain for versatile document understanding. arXiv preprint arXiv:2311.11810, 2023.
[8] H. Feng, Z. Wang, J. Tang, J. Lu, W. Zhou, H. Li, and C. Huang. Unidoc: A universal large multi modal model for simultaneous text detection, recognition, spotting and understanding. arXiv preprint arXiv:2308.11592, 2023.
[9] P. Fernandes, A. Madaan, E. Liu, A. Farinhas, P. H. Martins, A. Bertsch, J. G. de Souza, S. Zhou, T. Wu,G. Neubig, et al. Bridging the gap: A survey on integrating (human) feedback for natural language generation. Transactions of the Association for Computational Linguistics, 11:1643-1668, 2023.
[10] Y. Gao, Y. Xiong, X. Gao, K. Jia, J. Pan, Y. Bi, Y. Dai, J. Sun, and H. Wang. Retrieval-augmented generation for large language models: A survey. arXiv preprint arXiv:2312.10997, 2023.
[11] Y. Goyal, T. Khot, D. Summers-Stay, D. Batra, and D. Parikh. Making the v in vqa matter: Elevating the role of image understanding in visual question answering. In Proceedings of the IEEE conference on computer vision and pattern recognition, pages 6904-6913, 2017.
[12] A. Holtzman, J. Buys, L. Du, M. Forbes, and Y. Choi. The curious case of neural text degeneration. arXiv preprint arXiv:1904.09751, 2019.
[13] Q. Jin, F. Chen, Y. Zhou, Z. Xu, J. M. Cheung, R. Chen, R. M. Summers, J. F. Rousseau, P. Ni, M. J. Landsman, et al. Hidden flaws behind expert-level accuracy of gpt-4 vision in medicine. arXiv preprint arXiv:2401.08396, 2024.
[14] T. Kojima, S. S. Gu, M. Reid, Y. Matsuo, and Y. Iwasawa. Large language models are zero-shot reasoners. Advances in neural information processing systems, 35:22199-22213, 2022.
[15] Z. Kuang, H. Sun, Z. Li, X. Yue, T. H. Lin, J. Chen, H. Wei, Y. Zhu, T. Gao, W. Zhang, K. Chen, W. Zhang, and D. Lin. Mmocr: A comprehensive toolbox for text detection, recognition and understanding. arXiv preprint arXiv:2108.06543, 2021.
[16] T. Kwiatkowski, J. Palomaki, O. Redfield, M. Collins, A. Parikh, C. Alberti, D. Epstein, I. Polosukhin, J. Devlin, K. Lee, et al. Natural questions: a benchmark for question answering research. Transactions of the Association for Computational Linguistics, 7:453-466, 2019.
[17] N. Lee, W. Ping, P. Xu, M. Patwary, P. N. Fung, M. Shoeybi, and B. Catanzaro. Factuality enhanced language models for open-ended text generation. Advances in Neural Information Processing Systems,35:34586-34599, 2022.
[18] P. Lewis, E. Perez, A. Piktus, F. Petroni, V. Karpukhin, N. Goyal, H. K¨uttler, M. Lewis, W.-t. Yih, T.Rockt¨aschel, et al. Retrieval-augmented generation for knowledge-intensive nlp tasks. Advances in Neural Information Processing Systems, 33:9459-9474, 2020.
[19] Y. Li, Y. Qian, Y. Yu, X. Qin, C. Zhang, Y. Liu, K. Yao, J. Han, J. Liu, and E. Ding. Structext: Structured text understanding with multi-modal transformers. In Proceedings of the 29th ACM International Conference on Multimedia, pages 1912-1920, 2021.
[20] Z. Li, B. Yang, Q. Liu, Z. Ma, S. Zhang, J. Yang, Y. Sun, Y. Liu, and X. Bai. Monkey: Image resolution and text label are important things for large multi-modal models. In Proceedings of the IEEE/CVF Conference on Computer Vision and Pattern Recognition, pages 26763-26773, 2024.
[21] P. Liang, R. Bommasani, T. Lee, D. Tsipras, D. Soylu, M. Yasunaga, Y. Zhang, D. Narayanan, Y. Wu, A. Kumar, et al. Holistic evaluation of language models. arXiv preprint arXiv:2211.09110, 2022.
[22] H. Liu, W. Xue, Y. Chen, D. Chen, X. Zhao, K. Wang, L. Hou, R. Li, and W. Peng. A survey on hallucination in large vision-language models. arXiv preprint arXiv:2402.00253, 2024.
[23] Y. Liu, Z. Li, H. Li, W. Yu, M. Huang, D. Peng, M. Liu, M. Chen, C. Li, L. Jin, et al. On the hidden mystery of ocr in large multimodal models. arXiv preprint arXiv:2305.07895, 2023.
[24] P. Manakul, A. Liusie, and M. J. Gales. Selfcheckgpt: Zero-resource black-box hallucination detection for generative large language models. arXiv preprint arXiv:2303.08896, 2023.
[25] K. Tian, E. Mitchell, A. Zhou, A. Sharma, R. Rafailov, H. Yao, C. Finn, and C. D. Manning. Just ask for calibration: Strategies for eliciting calibrated confidence scores from language models fine-tuned with human feedback. arXiv preprint arXiv:2305.14975, 2023.
[26] H. Touvron, T. Lavril, G. Izacard, X. Martinet, M.-A. Lachaux, T. Lacroix, B. Rozi'ere, N. Goyal, E. Hambro, F. Azhar, et al. Llama: Open and efficient foundation language models. arXiv preprint arXiv:2302.13971, 2023.
[27] B. Wang, C. Wei, Z. Liu, G. Lin, and N. F. Chen. Resilience of large language models for noisy instructions. arXiv preprint arXiv:2404.09754, 2024.
[28] M. Xiong, Z. Hu, X. Lu, Y. Li, J. Fu, J. He, and B. Hooi. Can Ilms express their uncertainty? an empirical evaluation of confidence elicitation in Ilms. arXiv preprint arXiv:2306.13063, 2023.
[29] S. Yin, C. Fu, S. Zhao, T. Xu, H. Wang, D. Sui, Y. Shen, K. Li, X. Sun, and E. Chen. Woodpecker: Hallucination correction for multimodal large language models. arXiv preprint arXiv:2310.16045, 2023.
[30] X. Yue, Y. Ni, K. Zhang, T. Zheng, R. Liu, G. Zhang, S. Stevens, D. Jiang, W. Ren, Y. Sun, et al. Mmmu: A massive multi-discipline multimodal understanding and reasoning benchmark for expert agi. In Proceedings of the IEEE/CVF Conference on Computer Vision and Pattern Recognition, pages 9556-9567, 2024.
[31] Y. Zhang, Y. Li, L. Cui, D. Cai, L. Liu, T. Fu, X. Huang, E. Zhao, Y. Zhang, Y. Chen, et al. Siren's song in the ai ocean: a survey on hallucination in large language models. arXiv preprint arXiv:2309.01219, 2023.

## Claims

1. Computer-implemented method for detecting a malicious application or website by a transaction processing application, wherein the transaction processing application is, respectively, a mobile device application or a website transaction processing gateway, the method comprising:
inputting a transactional request, by said transaction processing application, from an application or website, said request comprising a transactional data record and a screenshot of a transaction screen or page of, respectively, said application or website;
sending the input data record and input screenshot, from the transaction processing application, to a backend controller;
requesting by the backend controller, from a prompt selector, a string comprising a feature-extraction prompt, wherein the feature-extraction prompt is a task-specific risk-related feature-extraction prompt, wherein the task is determined by the input data record;
sending the input screenshot and the received feature-extraction prompt string, from the backend controller, to a Large Vision Model, LVM;
receiving a string comprising risk classification features from said LVM;
verifying the received string by a format parser;
if the received string fails the verification by the format parser, requesting by the backend controller, to the prompt selector, a string comprising a feature-extraction prompt which explicitly mentions format parsing compatibility, and repeating the immediately preceding steps of sending, receiving and verifying;
sending the received string to a risk classification model for providing a risk classification;
sending the risk classification to the backend controller; and
determining by the backend controller if the application or website is determined as malicious, and accepting or rejecting the transactional request accordingly.

2. Computer-implemented method according to the previous claim, wherein the format parser verifies compliance with a json, xml, table or array format.

3. Computer-implemented method according to any of the previous claims, wherein the risk classification model is rule-based and the risk classification model includes a ruleset stored in a non-volatile computer-readable medium.

4. Computer-implemented method according to claim 1 or 2, wherein the risk classification model is a machine learning-based model, in particular a supervised learning model.

5. Computer-implemented method according to any of the previous claims, wherein sending the input screenshot and the received feature-extraction prompt string, from the backend controller, to the Large Vision Model, LVM comprises:
sending the input screenshot and the received feature-extraction prompt string to a LVM model repository connector;
selecting a LVM model, by the LVM model repository connector from a LVM model repository; and
sending the input screenshot and the feature-extraction prompt string, by the LVM model repository connector, to the selected LVM model.

6. Computer-implemented method according to any of the previous claims, wherein the risk classification features comprise one or more selected from the group consisting of: web link or links present in the screenshot; shortened web link or links present in the screenshot; country of origin of content present in the screenshot; language of content present in the screenshot; currency of content present in the screenshot; web domain of content present in the screenshot; and web domain of an originator email address present in the screenshot.

7. Computer-implemented method according to any of the previous claims, comprising instantiating parallel instances of a backend comprising the backend controller, the risk classification model, the prompt selector, the format parser; wherein a backend instance is instantiated for each input transactional request.

8. Computer-implemented method according to the previous claim wherein the parallel backend instances are run in parallel by one or more CPUs.

9. Computer-implemented method according to claim 7, wherein the risk classification model of each parallel backend instance is run in parallel by one or more GPUs.

10. Computer-implemented method according to any of the claims 7-9, wherein the LVM or LVMs are run in parallel by one or more GPUs.

11. Computer-implemented method according to any of the claims 7-10, wherein the parallel backend instances are stateless.

12. Computer-implemented method according to the previous claim wherein the parallel backend instances are arranged to be independent of an application or website user.

13. Computer-implemented method according to any of the previous claims wherein the sending of the input data record and the input screenshot, from the transaction processing application, to the backend controller, comprises verifying image resolution of the input screenshot before sending the input screenshot to the Large Vision Model, LVM.

14. Computer system for detecting a malicious application or website by a transaction processing application, the system configured to carry out the computer-implemented method according to any of the previous claims.
